# EUROPEAN PATENT APPLICATION

(11) **EP 4 687 317 A1**
(43) Date of publication of application: **04.02.2026**
(21) Application number: 24382864.7
(22) Date of filing: 02.08.2024
(51) Int. Cl.: H04L 9/00, G06F 21/60

(54) **METHOD AND SYSTEM OF HIDING A SECRET INTO A DIGITAL INFORMATION**

(71) Applicant: Limitless Technologies and Applications, SL, 08320 El Masnou (ES)
(72) Inventor: PUIGGALÍ ALLEPUZ, Jordi, 08172 Sant Cugat del Vallès (ES); CERVELLÓ GARCIA, Gerard, 08320 El Masnou (ES)
(74) Representative: Torner, Juncosa I Associats, SL

(57) **Abstract**

A method and system of hiding a secret into a digital information are proposed. The method comprises performing the following steps by a hiding module running on a computer device operated by a user: obtaining a digital information and a secret that the user wants to hide into the digital information; generating an invariant information using the digital information; generating a hiding information by implementing a random data processing comprising randomly mapping bits of the secret with bits of the invariant information; generating a secret identifier unique for the secret using the invariant information and/or a value provided by the user; generating a custodian hiding information using the generated secret identifier and an encrypted hiding information; sending the custodian hiding information and an identity proof of the user to a custodian module; and receiving a notification of whether the custodian hiding information has been stored.

## Description

### TECHNICAL FIELD

The present invention belongs to the field of secrets' protection and recovery (such as strong passwords or seed phrases) in a way that it is easy to remember and use for the secret owner. More specifically, the invention relates to a method and system of hiding a secret into a digital information. In some embodiments, the method also relates to a method and system for recovering a hidden secret from a digital information.

### BACKGROUND OF THE INVENTION

The classical method for hiding a secret is to encrypt it using a cryptographic algorithm and a key/password known only by the secret owner. Encryption transforms the secret in a new random data set (cyphertext) that makes the secret impossible to guess. However, while encryption secures the content, it does not conceal the presence of the ciphertext itself. The existence of ciphertext signals that there is hidden information, making it a potential target for security attacks aimed at uncovering the secret.

Another problem of encryption is that it requires a key (or a key pair in case of asymmetric encryption) that must be known by the secret owner. The secret owner cannot forget this key, otherwise the protected secret will be impossible to recover. Therefore, from a usability point of view, encryption is just substituting a secret by another one that should be easier to remember. Otherwise, encryption complicates the problem.

To make an encryption key easier to remember, techniques like Password Based Encryption (PBE) are used. With PBE, the secret owner provides a password that will be easier to remember to encrypt and decrypt the secret. The challenge lies in ensuring the robustness of the password against brute-force or rainbow table attacks that could compromise the encryption.

Considering robustness from an information theory point of view, encryption provides computational security. That means, the robustness depends on the computational resources of the adversary trying to break the encryption. For this reason, the minimum recommended encryption key length is periodically revised by cryptographic experts according to the computational performance improvements . For instance, now a days 128 bits symmetric key length is considered by the NIST robust enough until year 2030 (and beyond). For asymmetric keys, length is larger (3072 bits for RSA and 256 bits for ECC). Taking this under consideration, it means that to achieve at least computational level security, a user should remember a 128 bits random password used to protect the secret a challenge only possible by few users with unusual skills. For instance, if we represent this key in an alphanumerical way using the English alphabet with uppercase, lowercase and numbers (62 possible values), we are talking about a password of 21 random combination of characters. So, while this approach achieves robustness, it does not achieve easy to remember property, since remembering a 21 characters random combination it is not difficult for the majority of the users. To make it more usable, instead of using a random combination of alphanumeric characters, some proposals give a set of random words (e.g., BIP-39 mnemonic words for Bitcoin Wallet keys ). But remember a set of words representing the key (e.g., 12 or 24 different random words) does not still make the key easier to remember for the majority of users. Therefore, users tend to write-down these passwords in paper and hide them in a safe place, as the last resort in case they forgot the password. The risk is that papers can be damaged or destroyed accidentally, or if they can be found someone can use the information to recover the secrets (i.e., the secret is not hidden by printed in paper in plain text). Therefore, it is also an objective of this invention to provide a redundancy mechanism that prevents the secret from being lost because any of the components that hide it are lost, but that it is not increasing the risk of secret if redundancy makes the secret more evident (i.e., compromises the secret hidden property).

In the state of the art, to make easier the management of secret keys/passwords, and more concretely when the user needs to remember several ones, password managers were proposed. Password managers aim to relieve users from remembering numerous passwords by allowing them to remember just one master password, which grants access to all other stored passwords. While this simplifies the task of managing multiple passwords, it does not make it easier to remember the master password. The main risk here is that if the master password is compromised, all stored secrets are exposed.

Password managers protect secrets by encrypting them and securing the encryption key with the user's master password (e.g., using password-based encryption). This means that while the secrets are encrypted, they are not hidden; the presence of ciphertext is apparent to attackers. Examples of popular password managers include KeePass, LastPass, Bitwarden, and Keeper. These tools focus on reducing the exposure of the master password and securing the encrypted copies of secrets stored in their systems, but they do not make the master password easier to remember, nor do they hide the presence of the secrets-they merely encrypt them

An alternative to encrypting a secret is to use steganography, which hides the secret within another media or data file in an imperceptible way. In steganography, parts of the original media are subtly modified to embed the secret, resulting in a version of the media that contains the hidden secret without obvious signs of tampering. This method hides the secret rather than encrypting it. The two main challenges of steganography are ensuring that the modifications are imperceptible and making the hidden secret robust against any alterations to the media that contains it.

Imperceptibility is important, because is the basis of the hiding property. While initial proposals focus imperceptibility from a human means perspective (e.g., manipulating the less significant bits of the color of a pixel), advancements on the machine learning algorithms make possible to identify if an image has manipulations by using image processing techniques. To try to solve this problem, there are proposals that makes some preprocessing of the media to identify where changes can be done in a way that are even imperceptible by machine learning algorithms, such as CN109981918B, US6557103B1, and US11798117B2. But all these algorithms are generating a different manipulated version of the original media and therefore, all of them will disclose the secret in case someone compares the manipulated versions with the original one. Therefore, secret hiding strongly depends on making difficult to find the original media.

Regarding secret recovery, the main use cases of steganography are watermarking and fingerprinting: hide a secret mark in the media that allows the traceability of the owner of an original media or an official copy. To avoid that imperceptible third-party manipulations of the media could make the secret mark unrecoverable (e.g., avoid to identify the source used to make of illegal copies), steganography also focuses on how to hide the secret in the media in a way that could be recovered in case someone manipulates some parts trying to destroy the mark. This is a big problem is the media that hides the secret is shared or stored using instant messaging o social networks, since they apply quality lost compression and image resizing for reducing the image storage size. Current steganographic algorithms supports some margin of compression but cannot properly manage resizing. This is an important to consider in case the image that hides the secret is not the original one.

Examples of watermarking and fingerprinting use are known by CN116305017B, US20230410072A1, US20230344653, EP3149715A1, and US11860983. All of them focus on hiding a secret mark to identify the media, so if the mark cannot be recovered the problem is that they lose traceability.

There are proposals that are using steganography for hiding a secret that it is not a mark, such as CN111026583B. In this case, the original secret is not hidden but first encrypted using a secret key (derived from biometric data of the user) and the encrypted information is the one hidden using steganography. This method then, does not achieve perfect hiding (manipulates the original media) and requires biometrics for decrypting the encrypted secret hidden, so the robustness of the encryption is not high: biometrics does not achieve 128 bits of entropy (has a 99,999% accuracy) and it is easy vulnerable to reply to attacks (e.g., a fingerprint can be captured and reused to regenerate the key that decrypts the secret). Other proposals are EP2242229A1 and US9882879B1, that keep a secret key hidden in a media file stored on a mobile device. The key recovered from the media file is used to authenticate the user or perform cryptographic operations. The key is hidden using standard steganography and therefore, the proposals do not meet the perfectly hiding property. Finally, there are also proposals like US20230038922A1 for hiding secrets in text or media using steganography (i.e., manipulating the media) in a nested way. So, it is hiding the steganographic image hiding a secret, as the secret to hide in another steganographic image. Therefore, original secret recovery requires to rollback the steganographic recovery process in reverse order. Since each iteration manipulates the original image, it does not provide perfectly hiding property, but requires knowing the different images if each steganographic process.

Therefore, current state of the art solutions for managing secrets have several limitations and do not provide comprehensive solutions for all challenges. The key issues include:
1. Secret easy to remember: encryption requires remembering another secret that is used to protect the original one. Therefore, it is not completely solving the problem. In fact, encryption requires a robustness that could even make more complex passwords that the secrets protected. The use of steganography for hiding secrets in media files seems better for this aspect (e.g., it is easier to remember an image than 24 random words). Present invention is an alternative to steganography but is still based on using images for hiding secrets.
2. Robustness: The robustness of the secret protection is of paramount importance. In the case of encryption, that means using 128 bits random password. This generates a conflict with the previous usability requirement. In the case of steganography, robustness depends on two aspects: imperceptibility and resilience to manipulations. Imperceptibility depends on the algorithm used to select the places (or domain) where to hide the secret. The use of neuronal network algorithms makes them better but they still have a weakness: comparing the manipulated media with the original one reveals the secret. So, they cannot achieve perfectly hiding objective. Regarding manipulations, this is another big issue that limits how media is stored and/or shared. While algorithms are robust against usual quality lost compression, they do not support media resizing. Present invention addresses both aspects, achieving perfect hiding and high resilience to media rescaling.
3. Easy to manage multiple secrets: encryption-based proposals, facilitates the management of multiple secrets by encrypting them with a single one (e.g., password managers). In the case of steganography, the number of secrets that can be hidden depends on the cover media used for hiding. If the same image is used several times for different secrets, could be a problem from the robustness point of view (comparing the images that stored secrets allow to discover where are stored) and usability point of view (user cannot distinguish between the different versions of the image which one hides the secret to restore). If the user is using different images for each secret (or secret groups), the problem of remembering the image that hides a secret is becoming also problematic. Present invention supports using the same original image for hiding an unlimited number of secrets, so the user does not need to deal with multiple versions of the same image or a large number of images.
4. Perfectly hiding a secret: Encryption does not hide and steganography still have the problem of comparing media files. Present invention does not manipulate the media file and therefore, it is completely imperceptible that it is used for hiding a secret. It achieves perfectly hiding objective.
5. Redundancy: To avoid that the secret is lost in case the cyphertext od media that protects it is lost, multiple copies must be kept accessible to the user. In the case of encryption, this is usually done in a private way (e.g., password managers), since the cyphertext is evidence that something is protected in side. So, it is better not to expose it to attacks. Steganography hides the information and therefore can be shared in public places. The constraint is that if steganalysis techniques improve, they could in the future identify the media storing a secret and recover it. So, it has long-term risks. Another risk is that the publication place could apply compression algorithms and manipulate the media. If these manipulations do not imply resizing, the secret will be recoverable in most of the cases. Otherwise, it could be lost. Present invention allows media to be published without any risk of disclosing that it hides a secret. It is robust to both compression and resizing, ensuring the secret remains safe and recoverable.

New and improved solutions for hiding and recovering secrets are therefore needed.

### DESCRIPTION OF THE INVENTION

Present invention provides a method that combines cryptographic secret sharing and hiding techniques to achieve perfect secrecy, and that at the same time are easy to use and remember. The invention allows secret owners to hide a secret in a completely imperceptible way using a digital information (that can be represented in a binary format such as image, video, audio, text, etc.) and a recovery information. The digital information is never manipulated and therefore, it can be shared or stored publicly without any risk that someone can identify that it is used for hiding a secret. The user does not need to remember a complex secret, but just the digital information used to hide it (e.g., a picture that has some relevance to the user) and the recovery code.

For hiding and recovering the hidden secret, the invention introduces an algorithm that generates a special recovery code for hiding and recovering the secret from the digital information, without manipulation thereof. Therefore, perfect hiding is achieved, since there are no alterations in the digital information that could allow any attacker/eavesdropper to identify if this data is potentially hiding or not a secret (e.g., using machine learning techniques or comparing original files with manipulated ones). Thus, any public data or file can be used for hiding data. Furthermore, the same data can be used for hiding multiple secrets of the same secret owner or from different ones, without being noticed.

The recovery code generated by the algorithm, provides perfect secrecy: in case it is compromised it provides zero information about the secret. Only using the recovery code with the proposed algorithm and the correct digital information, allows to recover the secret.

The invention also defines additional mechanisms for sharing the recovery code with one or more custodians, facilitating the delegation of the secure custody of this code and/or the recovery of the secret in cases one custodian could not do it. For instance, define a threshold of custodians that need to participate to help the user to retrieve the recovery code.

One use case scenario of the invention is the protection of digital wallets, such as blockchain ones. In this case, the wallet owners can protect the private keys or seed phrases of their wallets, by hiding any of them in a binary file (e.g., picture). This binary file can be stored locally or in any public place without being noticeable that it hides a secret. That way, wallet owners do not need to remember complex seed phrases (24 random words), do not have the risk of money theft in case they wrote the seed phrase in paper, or are not being able to restore the wallet in case the paper that has the seed phrase is lost. Secret owners only need to remember the binary file or data (e.g., picture) they used to hide the secret, and retrieve the recovery code. If the binary data is stored in a public place (e.g., cloud service such as Instagram or X) the secret will be always accessible, while the recovery code could be keep protected locally by the user or in secure custody by a custodian.

Another use case scenario is using the method for hiding the recovery keys for multi-factor authentication mechanism, or any other secret that could be released to a nominee in the short or long term.

It is also contemplated to use the method for password reset, where the secret to be needed for performing the process must be recovered from an image.

Embodiments of the present invention provide, according to a first aspect, a method of hiding a secret into a digital information, the method comprising performing the following steps by a hiding module running on a computer device operated by a user: obtaining, from a user, a digital information and at least one secret that the user wants to hide into the digital information, the secret being in electronic form of several bits; generating an invariant information using the digital information, the invariant information comprising several bits; generating a hiding information by implementing a random data processing comprising randomly mapping at least some of the bits of the secret with at least some of the bits of the invariant information; generating a secret identifier unique for the secret using the invariant information and/or a value provided by the user; generating a custodian hiding information using the generated secret identifier and an encrypted hiding information, the latter being generated by encrypting the hiding information with a custodian encryption key; sending the custodian hiding information and an identity proof of the user to a custodian module; and receiving, from the custodian module, a notification of whether the custodian hiding information has been stored into a custodian storage of the custodian module, the custodian hiding information being stored along with a custodian user identity derived from the identity proof.

In some embodiments, a method for recovering a hidden secret from a digital information is also proposed. Particularly, the method comprises: obtaining, by a recovery module running on the computer device, from the user, the digital information, or a copy thereof, and a secret identifier; generating an invariant information using the digital information, or copy thereof; sending, by the recovery module, to a custodian module, an identity proof of the user and the secret identifier; validating, by the custodian module, the identity proof and checking if there is any custodian hiding information stored in a custodian storage related to the custodian user identity and the secret identifier; upon successful validation, generating, by the custodian module, user recovery information by: retrieving the encrypted hiding information from the custodian hiding information and i) encrypting the retrieved encrypted hiding information with a user encryption key, providing a second encrypted hiding information, and decrypting the second encrypted hiding information with the custodian decryption key, providing an encrypted hiding information with user key, or ii) decrypting the retrieved encrypted hiding information with the custodian decryption key and encrypting a result thereof with a user encryption key, providing an encrypted hiding information with user key; generating a recovery integrity proof using an identity proof of the custodian, the encrypted hiding information, and the user encryption key; generating a recovery commitment proof of the hiding information extracted from the encrypted hiding information; and combining the encrypted custodian hiding information with the recovery integrity proof and the recovery commitment proof; sending, by the custodian module, to the recovery module, a validation result and the generated user recovery information; validating, by the recovery module, the recovery commitment proof and recovery integrity proofs against the encrypted hiding information with user key; and upon a successful validation, recovering, by the recovery module, the secret by: retrieving the hiding information by decrypting the encrypted hiding information with user key using a user decryption key; applying a reverse of a mapping using the invariant information and the retrieved hiding information; providing, by the recovery module, the secret to the user.

The digital information can be in binary format or comprise any of a picture, a video, an audio, a document or a URL. The secret can comprise a cryptographic key, a password, a seed phrase, or a digital file.

In some embodiments, the mapping comprises mapping the bits of the secret and the invariant information having a same value. In other embodiments, the mapping comprises creating an array where a first value is the bit position in the invariant information that matches the first bit of the secret, and subsequent values in the array represent the offset positions from the previous one, corresponding to the positions where the invariant information has the same bit value as the next bit of the secret.

In some embodiments, the invariant information is generated by implementing a bit selection process on bits of the digital information. Alternatively, it can be generated by implementing at least one digital information transformation process on the digital information. For example, a domain, discrete, voxel, or frequency transformation of the digital information.

In some embodiments, the invariant information can be provided with one or more detection and correction codes.

In some embodiments, the custodian hiding information is further generated by using an integrity proof of the custodian hiding information and/or a commitment proof of the digital information, the integrity proof being generated by the identity proof of the user, the hiding information and the custodian encryption key, and the commitment proof being generated using the invariant information and the custodian encryption key.

In some embodiments, the custodian hiding information is stored into the custodian storage. This occurs after the custodian module has correctly validated the identity proof of the user and contents of the custodian hiding information using at least a custodian decryption key.

In some embodiments, the custodian encryption key and the custodian decryption key can be asymmetric keys with respect to each other.

In some embodiments, the recovery module before the sending of the identity proof of the user and the secret identifier to the custodian module comprises generating an invariant information proof of the digital information, or copy thereof, by using the invariant information and the custodian encryption key, the invariant information proof being then send to the custodian module along with the identity proof and secret identifier.

In some embodiments, the validating of the identity proof and checking if there is any custodian hiding information stored in the custodian storage further comprises retrieving, by the custodian module, the commitment proof from the custodian hiding information and validating the invariant information proof.

Other embodiments of the invention that are disclosed herein also include a system and software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

Therefore, present invention provides a secure and usable method and system for hiding and recovering a secret information of a user using a user provided digital information easy to remember by the user. The proposed hiding method does not manipulate the digital information as when using steganography, but generates a hiding information that allows to retrieve the secret from the digital information without manipulating it. Thus, it achieves perfect undetectability of the hidden secret, since there is no alteration of the digital information that could provide any evidence that it is used to hide a secret. Furthermore, the method allows using the same original digital information for hiding and recovering different secrets, making it more usable compared with steganographic methods, since it does not generate different versions of the same digital information (one per hidden secret) that cannot be distinguishable by the user. Such that it prevents the user of making mistakes. The method generates different hiding information (one per hidden secret) that are easier to identify by user (e.g., giving an identifier of the secret).

The hiding information achieves perfect secrecy, since it does not provide any information about the hidden secret or the digital information selected by the user for hiding the secret. Therefore, there are infinite variants of digital information that could be used by an attacker for trying to recover the secret (e.g., any picture with any size or any video/audio with any length). Furthermore, the method uses digital information larger than the secret, making the secret recovery by brute-force even more difficult (trying all possible ways of hiding a secret) than just trying the secret instead (i.e., trying all possible secret values). This facilitates the participation of custodians, that can manage the digital information in a secure way, since they cannot make use of the privilege of having access to the digital information for retrieving the secrets.

Custodians are an important component of the method, since they facilitate the users the access to the hiding information. For this reason, the method supports the use of multiple custodians to ensure that access could be always available to the hiding information and therefore, that user can always retrieve their secrets.

In some embodiments, the invention also contemplates user delegating access to their hiding information to nominees. To this end, custodians can support multiple access control rules for the hiding information based on the user instructions. Furthermore, the method also supports user implementing secret sharing using different hiding information that can be shared by user individually with nominees without the knowledge of custodians. This provides more flexibility in case the user wants to define digital inheritance rules that require collaboration of nominees to recover the secrets.

Present invention can be used to implement individual user secret backup and recovery practices (e.g., personal recovery of cryptographic keys) or to implement more elaborated recovery processes, such as digital inheritance mechanisms with custodians that could recover secret digital assets (e.g., access keys or cryptographic wallets).

The invention can be implemented in any type of environments, such as standalone client and server architecture, web-based architectures (e.g., SaaS environments), mobile application architectures and fully distributed architectures (e.g., distributes applications in blockchain environments).

### BRIEF DESCRIPTION OF THE DRAWINGS

The previous and other advantages and features will be more fully understood from the following detailed description of embodiments, with reference to the attached figures, which must be considered in an illustrative and non-limiting manner, in which:
Fig. 1 schematically shows the different modules used for hiding a secret into a digital information, according to an embodiment of the present invention.
Fig. 2 schematically shows the different modules used for recovering a hidden a secret from a digital information, according to an embodiment of the present invention.

### DETAILED DESCRIPTION OF THE INVENTION AND OF PREFERRED EMBODIMENTS

Present invention provides a secure and usable method and system for hiding and recovering a secret information of a user with the collaboration of one or more custodians. The method uses the secret and digital information provided by the user for generating a hiding information combining data processing, data transformation and advanced cryptographic techniques.

The invention introduces a hiding module and a recovery module that implement the steps of the method under the control of a user, and a custodian module that implements the steps of the method that can be delegated by the user to a custodian. The custodian module can be more than one, depending on the number of custodians.

The secret is protected by using two information components that must be combined again to recover it: (i) the digital information (or a copy thereof) easy to remember by the user, such an image, video, audio or any other binary file, and (ii) a hiding information containing the information about how to recover the secret from the digital information. The latter does not provide enough information for recovering the secret without knowing the former and therefore, can be shared safely with a custodian that will store it for future recovery, even by third-parties that the user could define (nominees).

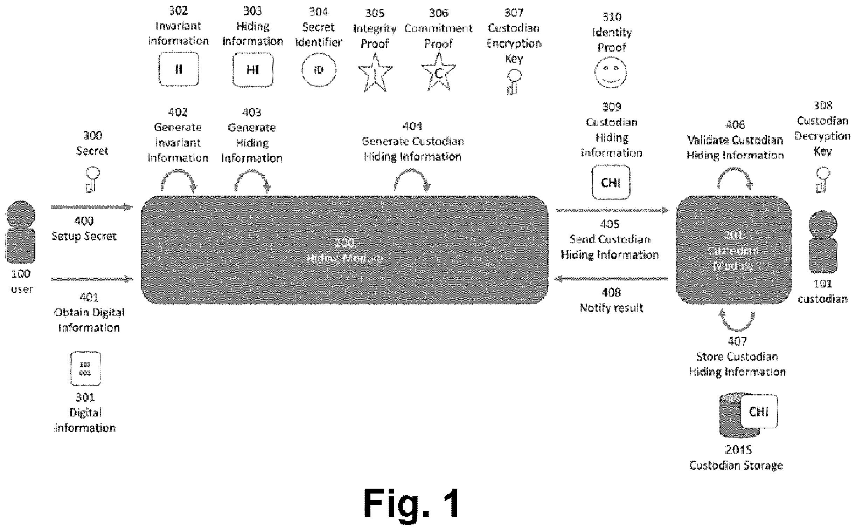

Fig. 1 shows an embodiment of the main actors and modules of the invention for hiding a secret. Particularly, according to this embodiment, a user 100 wants to hide a secret information into a digital information and a custodian 101 is in charge of the custodian of the key that will be needed to retrieve the hidden information from the digital information in a safe way. Hiding module 200 is the module managed by the user 100 responsible of implementing the method processes that are under the control of the user 100, and custodian module 201 is the module managed by the custodian 101 that implements the protocol processes that are under the control of the custodian 101.

Fig. 1 also shows the main processes of the secret hiding phase, and the components provided or generated by each of the actors and modules during the execution thereof. Main processes are:
- Setup secret 400: this is usually the first process of the method. In this process, the user 100 provides a secret 300 to hide to the hiding module 200. The secret can be any information in any electronic format (text such as a seed phrase or password, image, audio, binary data, etc.), that will be converted to a digital one before hiding it.
- Obtention of digital information 401: this can be implemented before or after the previous process. In this case, the user 100 provides to the hiding module 200 a digital information 301 that will be used to hide the secret 300. The digital information 301 can have any electronic format (text, image, audio, binary data, etc.) and it will be converted to a binary format if it is not. In a preferred embodiment, the digital information 301 is a multimedia file (e.g. picture, audio or video).
- Generation of invariant information 402: this process is executed in the hiding module 200 under the control of the user 100, and generates an invariant information 302 from the digital information 301 provided by the user 100. The invariant information 302 are robust against alterations of the digital information 301, such as changes of some of the bit values of the digital information 301.
- Generation of hiding information 403: this process is also executed in the hiding module 200 under the control of the user 100, and generates hiding information 303 that allows to retrieve the secret 300 from the invariant information 302. Particularly, this process involves a random data processing, e.g. a random mapping, of at least some of the bit values of the secret 300 and invariant information 302.
- Generation of custodian hiding information 404: this process, executed in the hiding module 200 under the control of the user 100, generates the custodian hiding information 309. The latter can comprise:
   ∘ An encrypting/encoding of the hiding information 303 using a custodian encryption key 307;
   ∘ A secret identifier 304 that allows to uniquely identify the hidden secret 300.

In some particular embodiments, the custodian hiding information 309 can also comprise:
∘ An integrity proof 305 of the custodian hiding information 309 that protects the authenticity and integrity of the latter; and
∘ A commitment proof 306 of the invariant information 302 that enables the user 100 to proof the knowledge of this information in the secret recovery phase.
   - Sending custodian hiding information to custodian 405: in this process, the hiding module 200 sends, to the custodian module 201, under the supervision of the custodian 101, the custodian hiding information 309 with an identity proof 310 of the user 100. The method assumes that the identity proof 310 is obtained by the hiding module 200 using any authentication process know by the state of the art such as login/password, federated authentication, etc. accepted by the custodian 101.
   - Custodian validation of custodian hiding information 406: this process, executed by the custodian module 201 under the supervision of the custodian 101, validates the identity proof 310 of the user 100 against the custodian 101 access policies. If this validation is correct, then validates the integrity proof 305 and commitment proof 306 (if included in the custodian hiding information 309).
   - Store custodian hiding information 407: this process, executed by the custodian module 201 under the supervision of the custodian 101, stores the custodian hiding information 309 in the custodian storage 201S in case the custodian validation of custodian hiding information 406 process is successful.
   - Notify result to user 407: Finally, in this process, the custodian module 201 sends the result of the previous processes to the hiding module 200 to be conveyed to the user 100. The result will be marked as successful if the custodian hiding information 309 has been properly stored in the custodian storage 201S, and unsuccessful otherwise.

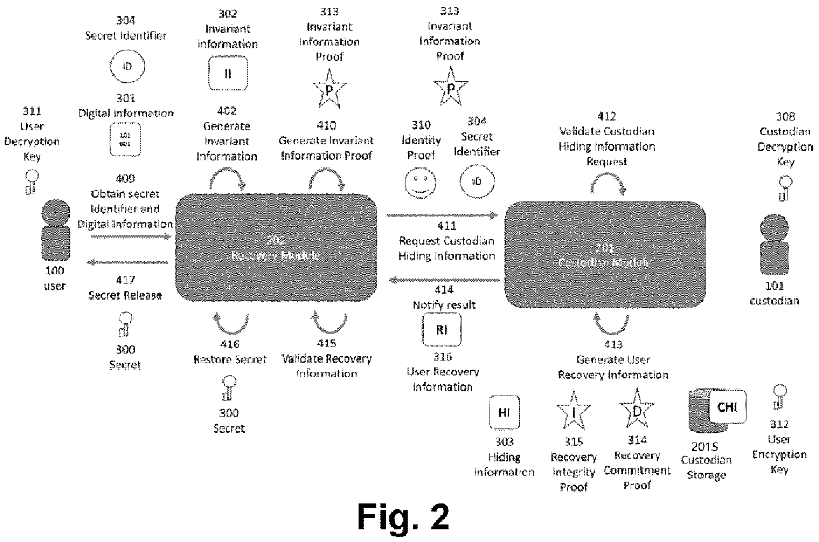

With reference to Fig. 2, this figure shows the main actors and modules of the invention for recovering a hidden secret. In this case, a recovery module 202 managed by the user 100 is the responsible of implementing the method processes that are under the control of the user 100. The figure also shows the main processes of the secret recovery phase, along with the components provided by each actor or generated by the modules, which are essential for the execution of these processes. It is important to note that the same naming conventions and numbering are used for the modules, components, and processes that are common with the secret hiding phase. The main processes are:
- Obtain secret identifier and digital information 408: this process, executed by the recovery module 202 under the supervision of the user 100, obtains the digital information 301 (or a copy thereof of less resolution or even compress) to hide the secret 300 and its related secret identifier 304 from the user 100. With this information it is possible to start the secret recovery phase.
- Generate Invariant Information 402: this process, executed in the recovery module 202 under the control of the user 100, is exactly the same as the one executed by the hiding module 200 in the secret hiding phase (see Fig. 1), and also generates an invariant information 302 from the digital information 301 provided by the user 100.
- Generate Invariant Information proof 410: this process, which might be not implemented in all the embodiments, is executed in the recovery module 202 under the control of the user 100, and generates an invariant information proof 313, that proves in a zero-knowledge way to the custodian 101 that the user 100 has the correct digital information 301 related to the secret 300, without compromising the secrecy of the digital information 301.
- Request Custodian Hiding Information 411: in this process, the user 100 sends to the custodian 101, via their respective module 202, a request for obtaining user recovery information 316 needed for recovery the secret 300. To this end, the recovery module 202 sends to the custodian module 201 a request containing an identity proof 310 of the user 100 and the secret identifier 304 provided by the user 100. In some embodiments, it also sends the invariant information proof 313. It is assumed that the identity proof 310 is obtained in the same way as in the secret hiding phase.
- Validate Custodian Hiding Information Request 412: this process, executed in the custodian module 201 under the control of the custodian 101, first validates the identity proof 310 as in the secret hiding phase. If the validation is successful, the custodian module 201 then validates if there is custodian hiding information 309 in the custodian storage 201S related to the identity proof 310 and the secret identifier 304. If so, in some embodiments, the custodian module 201 can also retrieve the commitment proof 306 from the custodian hiding information 309, and validate the invariant information proof 313 against it. The final result of this process is successful only if all validations performed are successful. Otherwise, the result is a failure.
- Generate User Recovery Information (413): if the result of the validate custodian hiding information request 412 process is successful, the custodian module 201 under the control of the custodian 101, generates the user recovery information 316. To this end, the custodian module 201 retrieves the encrypted hiding information from the custodian hiding information 309 and encodes it with a user encryption key 312, after or before decrypting the encrypted hiding information with the custodian decryption key 308. Then, it generates a recovery integrity proof 315 and a recovery commitment proof 314, for proving that the encryption process has been implemented properly. Finally, the custodian module 201 generates the user recovery information 316, by combining the hiding information encrypted with the user encryption key 312, the recovery integrity proof 315, and the recovery commitment proof 314. If the validate custodian hiding information request 412 process is unsuccessful, the user recovery information 316 will be left empty.
- Notify result 414: in this process, the custodian module 201 sends to the recovery module 202, the result of the validate custodian hiding information request 412 process and the user recovery information 316.
- Validate Recovery Information 415: If the result received from the custodian module 201 is successful, the recovery module 202 validates the recovery commitment proof 314 and recovery integrity proof 315 against the encrypted hiding information with user key. If any of these validation fails, or the result received from the custodian module 201 is unsuccessful, the result of the process is a failure. Otherwise, the result of the process is successful.
- Restore Secret 416: If the validate recovery information 415 process is successful, the recovery module 202 proceeds with the recovery of the secret 300. To this end, the recovery module 202 retrieves the hiding information 303 by decrypting the encrypted hiding information included in the user recovery information 316 (i.e. the encrypted hiding information with user key) using a user decryption key 311. After this, the recovery module 202 recovers the secret 300 by applying the reverse/inverse of the mapping implemented in the secret hiding phase by the hiding module (Fig. 1), using the invariant information 302 and the retrieved hiding information (303).
- Secret release 417: Finally, recovery module 202 provides the restored secret 300 to the user 100.

Please note that in some embodiments, the recovery module 202 and hiding module 200 can be implemented as the same module.

The proposed method can include additional processes to strength the long-term security and availability custody of the hiding information by allowing the participation of more than one custodian 101 in the hiding, storage and recovery processes. To this end, in some embodiments, a Multi-Party Computation protocol that enforces the participation of the custodian 101 in the secure storage and recovery of the secret 300 is used. This protocol prevents one custodian from having complete knowledge of the hiding information 303 generated by the hiding module 201 of the user 100, or from making impossible to recover it (e.g., because the custodian is not available or because the custodian is providing incorrect recovery information).

Following, some particular examples of the proposed methods for hiding and recovering of a secret are detailed.

For hiding the secret 300, the user 100 can interact with the hiding module 200 to provide the secret 300 and the digital information 301. Then, hiding module 200 can perform a set of mathematic and/or cryptographic operations using the secret 300 and digital information 301 to obtain the hiding information 303.

### Setup secret

Hiding module 200 receives a secret 300 to be protected from the user 100. This secret can be provided in any digital format, such as a text type by the user, a data file, a digital capture (e.g., a picture or video). In case the secret 300 is not in a digital format, hiding module 200 can be extended or interact with other optional modules for transforming the information to a digital format. Examples of this transformation are any digitalization process known in the state of the art, such as to take a picture or video of the secret 300, to record an audio of the secret 300, scan a document containing the secret 300 or to use a text-to-speech or any other artificial intelligence algorithm that generates digital data processing any other type of information.

The secret 300 can be provided with or without user interaction to the hiding module 200. For instance, it can be received by another user module, read from a specific location or requested to the user 100.

In a particular embodiment, the secret 300 is a cryptographic key, password or seed phrase. Alternatively, in other embodiments, the secret 300 is a digital file, such a picture, text document or any other type of document or file.

### Obtain digital information

Before, after or while obtaining the secret 300, the hiding module 200 also request to the user 100 the digital information 301 that will be used to hide the secret 300. The digital information 301 can be provided in any digital format, such as a data file or any digital capture (e.g., a picture, video or audio). The digital information 301 can be directly provided by the user 100 (e.g. file containing the information) or indirectly (a reference to a place where the information can be obtained).

Digital information 301 can be also the result of processing a non-digital file, such as a text digital document obtained from implementing an OCR process over a scanned document.

### Generate invariant information of the digital information

Once the hiding module 200 has the digital information 301, it generates the invariant information 302 that will always be the same even in case of any limited alteration of the digital information 301. Therefore, in case any bit or small set of bits of the digital information suffers a change on its value by accident or in purpose (manipulation), the altered digital information version can still be used for recovering the secret 300. Therefore, invariant information 302 cannot be always generated using fingerprint methods such as a cryptographic hash and summary function such as a SHA1, SHA2, MD5 or any other algorithm belonging to this family. For this reason, this method implements an especial process for generating this invariant information.

The invariant information 302 can be the same digital information 301, a subset of the digital information 301, the result of applying an invariant detection process of the digital information 301, or a combination thereof. In case of applying an invariant detection process of the information, this will be a process that depends on the type of digital information 301 provided.

If the invariant information 302 is the same as the digital information 301, it is simply a copy of the digital information 301.

If the invariant information 302 is a subset of the digital information 301, it is obtained by preselecting bits that are unlikely to change during compression. For images, videos, or audio, this involves selecting bits from pixels or audio samples that are less susceptible to change under quality loss compression algorithms.

If the invariant information 302 is generated through an invariant detection process, it involves a digital transformation that consistently produces the same value, despite any later changes to the digital information 301. For multimedia files such as pictures, videos, or audio, this process includes transforming the digital information 301 from the spatial domain (e.g., specific pixel or voxel color values) to the frequency domain. The invariant information 302 is then derived from processing frequency domain values in groups (e.g., 8x8 pixel matrices).

For images, this method uses discrete transformations like the Discrete Cosine Transformation, Discrete Wavelet Transformation, or Discrete Fourier Transformation. The transformation is applied over a matrix of pixels (e.g., 8x8), and the coefficients' values are used to create the invariant information 302 by assigning binary values (0 or 1) to each matrix pixel based on their proximity to the median value of all pixels in the matrix. The matrix binary value is the median value of the pixel binary values, and the invariant information 302 is the sequence of these matrix binary values. To ensure resilience to resizing, the method optionally resizes the digital information to a predefined value (e.g., 1024x768) before the invariant detection process.

For multi-dimensional media, such as 3D media, the method considers voxels and uses cubes of voxels instead of matrices. For audio, the method uses vectors (one-dimensional) instead of matrices.

For videos or audio, the invariant information 302 is obtained by applying similar frequency domain transformation processes used in quality loss compression, such as MPEG for video or MP3 for audio.

In all embodiments, the method can include adding detection and correction codes to the invariant information 302 to identify and correct potential alterations in the digital information 301 during the secret recovery process.

### Generate hiding information of the digital information

Hiding module 200 generates the hiding information 303 by implementing a random data processing between bit values of the secret 300 and random bits of the invariant information 302.

In a preferred embodiment, the random processing consists of mapping the bits values of the secret information with random bits of the invariant information 302 that have the same value. The result will be an array of as many positions as the secret length, containing the position in the invariant information 302 where the bit value can be obtained. The hiding information 303 will contain the random seed and the array. Alternatively, the mapping consists of making an array that contains as the first value the bit position in the invariant information 302 that has the same value as the first bit of the secret 300, and the rest of the array values are the offset position from the previous one that has the same bit value as the next secret bit. The hiding information 303 will contain the random seed and the array.

Randomization can be performed on the invariant information 302 before the mapping process or can be performed in the array afterwards, by applying a random permutation of the invariant information 302 using a random seed.

### Generate custodian hiding information

Finally, hiding module 200 generates custodian hiding information 309 that will be sent to the custodian module 201. This information will allow recovering the secret 300 when combined with the digital information 301, but it does not provide any clue of the secret 300 since perfectly hides it.

In some embodiments, the custodian hiding information 309 comprises a secret identifier 304 unique for the secret 300, and the hiding information 300. Alternatively, it can also contain an integrity proof 305 generated using the identity proof 310 of the user 100, the hiding information 303 and the custodian encryption key 307. Alternatively or complementarily, it can also contain a commitment proof 306 of the secret generated using the invariant information 302 and the custodian encryption key 307.

### Secret identifier

The secret identifier 304 is unique for each secret 300 and can be generated at random or by making a fingerprint of the secret 300 or the hiding information 303. Alternatively or complementarily, the user 100 can provide a description of the secret 300 that will be more human friendly and easier to identify for the user 300. The secret identifier 304 can be any of the above options or the combination of them.

### Hiding information

In a particular embodiment, the hiding information 303 is encrypted using the custodian encryption key 307 before being added to the custodian hiding information 309.

In an alternative embodiment where there are more than one custodian modules 201, hiding module 200 could have multiple custodian keys, such as:
1. One different custodian encryption key 307 per custodian to encrypt the hiding information 303 that will be added to the custodian hiding information 309 delivered to this custodian 101; and/or
2. One common custodian encryption key 307 for a group of custodians that is used to encrypt the hiding information 303 that will be added to the custodian hiding information 309 delivered to this group of custodians.

When using a single key for a group of custodians 101, the method contemplates using a secret sharing mechanism for enforcing a distributed decryption of the encrypted hiding information. That way, a single custodian 101 cannot decrypt the hiding information without the collaboration of a predefined threshold of other custodians. In this case, the method contemplates a setup phase carried out before the encryption, in which the user 100 and custodians 101 collaborate in a centralized or distributed way, to create the custodian decryption key 308 shares and the user encryption key 312 and/or custodian encryption key 307 shares.

In case of a centralized setup, the user 100 generates the custodian encryption key 307 (e.g. an encryption public key) and the custodian decryption key 308 (e.g. a decryption private key) in the hiding module 200. Then, the hiding module 200 splits in shares the custodian decryption key 308 using a cryptographic secret sharing scheme, like a Shamir Secret Sharing Scheme, using as a parameter a threshold. This threshold defines the minimum number of custodians 101 that are required to decrypt the encrypted hiding information 303 encrypted with the custodian encryption key 307. Each custodian decryption key 308 share is distributed by the user 100, using the same hiding module 200 or other alternative ways, to the intended custodian 101 or to the custodian module 201 of the custodian 101.

In case of a decentralized setup, the custodian decryption key 308 shares are generated in a decentralized way by the custodians 101 that are part of the group. In this case a Multi-Party Computation (MPC) Protocol is used for ensuring that all the custodians 101 are participating in the process honestly. Therefore, custodians 101 need to generate MPC cryptographic proofs to prove that the final set of custodian decryption key 308 shares generated using the MPC protocol by each custodian 101 can be used to decrypt the hiding information 303 encrypted with the custodian encryption key 307, and that the custodian encryption key 307 has been generated using the custodian decryption key 308 of each custodian 101. The user 100 or any third-party trusted by the user 100, will verify that all these MPC cryptographic proofs are correct before using the custodian encryption key 307 in the hiding module 200.

In any of the centralize and decentralized approaches, the method supports definition of different levels of custodian groups. For instance, it can support that the custodian decryption encryption key 307 is related to two custodian decryption key 308 shares with threshold 2 (both are needed) and at the same time one or each of the custodian decryption key 308 shares could be also split in other shares using a different threshold or approach (centralized or decentralized).

### Integrity proof

After encrypting the hiding information 303 with the custodian encryption key 307, the hiding module 200 can optionally generate an integrity proof 305 of the encryption. In that way, it is possible to check that the encryption has been implemented by the intended user and has not been altered afterwards. For instance, that the user is not using the encrypted information for another user to try to get access to his/her hiding information (e.g., re-encrypting the encrypted hiding information send by another user) when executing the recovery process.

In a particular embodiment, the integrity proof 305 is obtained using a Schnoor signature using the user identifier as part of the statement.

### Commitment proof

After encrypting the hiding information 303 with the custodian encryption key 307, the hiding module 200 can optionally generate a proof of the encrypted contents and/or a proof of knowledge of the random padding used for encrypting. That way, custodians 101 can check that the encryption is properly done (i.e., that it is not a re-encryption of another encrypted secret) and that the contents decrypted are the same ones committed when encrypted.

In a particular embodiment, the commitment proof 306 is based on any computational or perfectly binding and hiding commitment known by the state of the art, such as a Pedersen Commitment. The commitment is implemented on the whole hiding information 303, part of the hiding information 303, or a fingerprint of the hiding information 303. Additionally, the commitment can be complemented with a proof of knowledge of the random padding used by the encryption algorithm.

The method contemplates the implementation of a single proof that combines the Integrity and Commitment proofs in one. For instance, by adding the user identifier in the statement of the Commitment proof.

### Sending custodian hiding information

Hiding module 200 sends to the custodian module 201 an identity proof 310 of the user 100 and the custodian hiding information 309.

In case there is more than one custodian 101, the custodian hiding information 309 is sent to all the custodians. If there are custodian groups, hiding module 200 can send specific custodian hiding information to each group.

The identity proof 310 can be provided by a trusted third-party identity provider or custodian. The third-party identity provider can be an identity provider used by the same custodian or any other external identity provider trusted by the custodian or group of custodians. The authentication mechanism used by this identity provider could be any one known by the state of the art.

### Validating custodian hiding information

Custodian module 201, under the control of the custodian 101, validates the received identity proof 310 of the user 100 and the contents of the custodian hiding information 309 using the custodian decryption key 308.

The identity proof 310 is validated by checking if the identity proof is generated by a trusted identity provider. Optionally, the custodian module 201 can also check if the user 100 belongs to the list of the users allowed to custody his/her information.

If the identity proof validation is successful, then the custodian module 201 extracts the contents of the custodian hiding information 309 and verifies them.

The integrity 305 and commitment 306 proofs, if used, can be verified using the encrypted hiding information extracted from the custodian hiding information 309, the user identity proof 310 and the custodian decryption key 308. To this end, the method expects that encryption keys have homomorphic properties to facilitate the validation of these proofs.

### Store custodian hiding information

If validation is successful, custodian module 201 stores the custodian hiding information 309 with a custodian user identity derived from the identity proof 310.

### Notify result of validation

Custodian module 201 notifies the results of the validation and custodian hiding information storage to the hiding module 200.

In a particular embodiment, the custodian module 201 stores the hiding information 303 without decrypting it. In an alternative embodiment, the custodian module 201 decrypts the hiding information 303 using its decryption key 308, and stores the decrypted hiding information instead of or in addition to the encrypted hiding information. Optionally, the custodian module 201 generates a proof of decryption of the hiding information 303 using its custodian decryption key 308, and stores this proof with the encrypted and decrypted hiding information.

Finally, custodian module 201 can also optionally store the identity 310, integrity 305 and commitment 306 proofs send by the hiding module 200 with the custodian hiding information 309.

With regard to the recovering process, this can be implemented as follows.

### Obtain secret identifier and digital information

Recovery module 202 obtains from the user 100 the secret identifier 304 and the digital information 301 (or a copy thereof) related to the secret 300 to recover.

For obtaining the digital information 301, the same processes described above in "Obtain digital information" can be used.

For obtaining the secret identifier 304, the method contemplated two options: i) it is typed by the user 100; ii) it is selected from a list of secret identifiers shown by the recovery module 202 to the user 100.

### Generate invariant information

Recovery module 202 generates the invariant information 302 of the digital information 301 (or of the copy). For this step, the method contemplates that the recovery module 202 implements the same processes executed by the hiding module 200 when protecting the secret 300, described before in "Generate invariant information of the digital information".

### Generate invariant information proof of knowledge

Recovery module 202 can generate a proof of knowledge of the invariant information 313 using the invariant information 302 and the custodian encryption key 307. This proof of knowledge is linked to the commitment proof 306. The proof of knowledge 313 will show that the hiding module 200 can reconstruct the commitment.

### Request custodian hiding information

Recovery module 202 sends to the custodian module 201 the identity proof 310 of the user 100, the secret identifier 304, and (optionally) the proof of knowledge 313. Alternatively, the user 100 also sends a user encryption key 312, for example, a general public key (used for multiple interactions) or an ephemeral public key (generated for each interaction). In case there are multiple custodians 101, this information is sent to all of them.

### Validate request

Custodian module 201, under the control of the custodian 101, validates the identity proof 310 and checks if the user 100 has already any stored custodian hiding information 309 related to the secret identifier 304. If there is hiding information 303, the custodian module 201 retrieves the custodian hiding information 309 related to the secret identifier 304 and then: i) checks if the identity proof 310 related to the custodian hiding information 309 is related to a user identity; and ii) validates if the proof of knowledge 313 is related to the commitment proof 306 stored with the custodian hiding information 309.

In a particular embodiment, the check of the identity proof 310 consists of checking if the user identity contained in the identity proof has been used in the statement of the integrity proof contained in the custodian hiding information.

The validation of the invariant information proof of knowledge 313 can be based on proving that the same hiding information 303, part of the hiding information 303, or a fingerprint of the hiding information 303 used to generated the commitment proof 306 described before, has been used to generate the proof of knowledge 313.

### Generation of user recovery information

If the validation is successful, custodian module 201 generates user recovery information 316 containing: a user key encoded hiding information generated using the encoded hiding information extracted from the custodian hiding information (309); an optional recovery integrity proof of the encoded recovery information generated using an identity proof 310 of the user 100, the hiding information 303, and the user encryption key 312; and an optional commitment proof of the secret extracted from the encoded hiding information. Otherwise, user recovery information is left empty.

### Encoded recovery information

In a particular embodiment, the hiding information 303 extracted from the custodian hiding information 309 is encrypted using the user encryption key 312 before being added to the user recovery information. This user encryption key 312 is provided by the user in advance.

Optionally, the hiding information 303 can be stored as originally encrypted by the hiding module 200 using the custodian encrypted key 307, as explained before in "Generate custodian hiding information". In this case, the encrypted hiding information is decrypted by the custodian 101 using the custodian decryption key 308 before or after encrypting it using the user encryption key 312.

In an alternative embodiment where there are more than one custodian modules 201, all modules perform the encryption of their hiding information 303 obtained from their local stored custodian hiding information 309, using the user encryption key 312.

In case the hiding information 303 is stored as originally encrypted by the hiding module 200, custodians also perform a decryption process before or after the encryption using the custodian decryption key 308. The method contemplates two different approaches for decrypting the encrypted hiding information using custodian decryption key 308: One key per custodian; and/or one share of one custodian group decryption key 308 for each member of the group of custodians.

To perform the custodian decryption process, in case each custodian has its own key, this decryption is performed by the custodian using the related decryption key 308. If there is a group key, each custodian performs a "partial" decryption using their own share of the group custodian decryption key 308.

### Recovery integrity proof

After encrypting the hiding information 303 with the user encryption key 312, the hiding module 200 can optionally generate a recovery integrity proof 315 of the encryption. That way, it is possible to check that the encryption has been implemented by the intended custodian and has not been altered afterwards. For instance, that the custodian is not using the encrypted information for another custodian to try to disrupt the recovery process of the hiding information (e.g., re-encrypting the encrypted hiding information send by another custodian). In a particular embodiment, the recovery integrity proof 315 is done using a Schnorr signature using the custodian identifier as part of the statement.

### Recovery Commitment proof

After encrypting the hiding information 303 with the user encryption key 312, the custodian module 201 can optionally generate a recovery commitment proof 314 of the encrypted contents and/or knowledge of the random padding used for encrypting. That way, users and/or other custodians can check that the encryption is properly done (i.e., that it is not a re-encryption of another custodian encrypted hiding information) and that the contents decrypted by the user are the same ones committed when encrypted.

In a particular embodiment, the recovery commitment proof 314 is based on any computational or perfectly binding and hiding commitment known by the state of the art, such as a Pedersen Commitment. The commitment is implemented on the whole encoded hiding information, part of the encoded hiding information, or a fingerprint of the encoded hiding information. Additionally, the commitment can be complemented with a proof of knowledge of the random padding using by the encryption algorithm.

The method contemplates the implementation of a single proof that combines the integrity 315 and commitment 314 proofs in one. For instance, by adding the user identifier in the statement of the recovery commitment proof 314.

### Sending user recovery information

Custodian module 201 sends to recovery module 202 the validation result of the data sent by this module, and the user recovery information 316. Optionally, if the user recovery information 316 is not empty, custodian module 201 can also send the complete custodian hiding information originally sent by the user 100 on the hiding secret phase.

### Validate the response from custodian module

If the validation result is successful, the recovery module 202 checks (if present) the recovery integrity proof 315 and recovery commitment proof 314 related to the encoded hiding information, using the user decryption key 311 and custodian encryption key 307. Otherwise, the secret recovery process is cancelled and the user 100 notified of the unsuccessful validation by the custodian 101.

### Secret retrieval

If the previous check is successful, recovery module 202 recuperates the secret 300 using: i) the hiding information 303 decrypted using the user decryption key 311 and the encoded hiding information included in the user recovery information 316; and ii) the invariant information 302 obtained from the digital information 301 provided by the user 100 at the beginning of the secret recovery process. Otherwise, the recovery process is cancelled and user notified about the check failure

### Decoding hiding information

As explained in "Generate custodian hiding information", the method contemplates two different approaches for encrypting hiding information using custodian key: One key per custodian; and/or One key for a group of custodians. In case there is one key per custodian 101, the user 100 decrypts the encrypted hiding information sent by the custodian 101 using the user decryption key 311 and compare if all have the same hiding information 303. In case there is a key for a group of custodians 101, the user decrypts using the user decryption key 311 the partial decryptions made by the custodians, and then combines these partial decryptions to obtain the hiding information 303. The combination process will depend on the secret sharing scheme implemented in the hiding phase, as described before.

### Reconstructing secret

After decrypting the hiding information 303, the recovery module 202 can reconstruct the secret from the invariant information 302 obtained from the digital information 301 (or the copy thereof). To retrieve the secret 300, the recovery module 202 implements the reverse/inverse of the random processing implemented during the secret hiding phase. In this case, the secret 300 is retrieved by reverse mapping the bits values of the secret information from random bits of the invariant information 302, using the array of positions and the random seed contained in the invariant information 302.

In a particular embodiment, the reverse random processing consists of mapping back the bits values of the secret 300 from bits of the invariant information 302. To this end, recovery module 202 will retrieve the array and random seed from the hiding information 303 and then reconstruct the secret 300. Secret reconstruction will consist of assigning to each secret bit the bit value of the position in the invariant information 302 specified in the array. Depending on the embodiment, the position in the invariant information 302 can be absolute or relative to the previous one.

The reverse randomization can be performed on the invariant information 302 or the array before the mapping process, by applying the reverse random permutation using a random seed.

### Secret release

Recovery module 201 provides the secret 300 to the user 100. The secret 300 can be displayed or downloaded into a file by the recovery module 200.

Various aspects of the proposed method, as described herein, may be embodied in programming. Program aspects of the technology may be thought of as "products" or "articles of manufacture" typically in the form of executable code and/or associated data that is carried on or embodied in a type of machine readable medium. Tangible non-transitory "storage" type media include any or all of the memory or other storage for the computers, processors, or the like, or associated modules thereof, such as various semiconductor memories, tape drives, disk drives and the like, which may provide storage at any time for the software programming.

All or portions of the software may at times be communicated through a network such as the Internet or various other telecommunication networks. Such communications, for example, may enable loading of the software from one computer or processor into another, for example, from a management server or host computer of a scheduling system into the hardware platform(s) of a computing environment or other system implementing a computing environment or similar functionalities in connection with image processing. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links or the like, also may be considered as media bearing the software. As used herein, unless restricted to tangible "storage" media, terms such as computer or machine "readable medium" refer to any medium that participates in providing instructions to a processor for execution.

A machine-readable medium may take many forms, including but not limited to, a tangible storage medium, a carrier wave medium or physical transmission medium. Non-volatile storage media include, for example, optical or magnetic disks, such as any of the storage devices in any computer(s), or the like, which may be used to implement the system or any of its components shown in the drawings. Volatile storage media may include dynamic memory, such as a main memory of such a computer platform. Tangible transmission media may include coaxial cables; copper wire and fiber optics, including the wires that form a bus within a computer system. Carrier-wave transmission media may take the form of electric or electromagnetic signals, or acoustic or light waves such as those generated during radio frequency (RF) and infrared (IR) data communications. Common forms of computer-readable media may include, for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a PROM and EPROM, a FLASH-EPROM, any other memory chip or cartridge, a carrier wave transporting data or instructions, cables or links transporting such a carrier wave, or any other medium from which a computer may read programming code and/or data. Many of these forms of computer readable media may be involved in carrying one or more sequences of one or more instructions to a physical processor for execution.

Those skilled in the art will recognize that the present teachings are amenable to a variety of modifications and/or enhancements. For example, although the implementation of various components described herein may be embodied in a hardware device, it may also be implemented as a software only solution-e.g., an installation on an existing server. In addition, image processing as disclosed herein may be implemented as a firmware, firmware/software combination, firmware/hardware combination, or a hardware/firmware/software combination.

The present disclosure and/or some other examples have been described in the above. According to descriptions above, various alterations may be achieved. The topic of the present disclosure may be achieved in various forms and embodiments, and the present disclosure may be further used in a variety of application programs. All applications, modifications and alterations required to be protected in the claims may be within the protection scope of the present disclosure.

## Claims

1. A method of hiding a secret into a digital information, the method comprising performing the following steps by a hiding module (200) running on a computer device operated by a user (100):
obtaining, from a user (100), a digital information (301) and at least one secret (300) that the user (100) wants to hide into the digital information (301), the secret (300) being in electronic form of several bits;
generating (402) an invariant information (302) using the digital information (301), the invariant information (302) comprising several bits;
generating (403) a hiding information (303) by implementing a random data processing comprising randomly mapping at least some of the bits of the secret (300) with at least some of the bits of the invariant information (302);
generating a secret identifier (304) unique for the secret (300) using the invariant information (302) and/or a value provided by the user (100);
generating (404) a custodian hiding information (309) using the generated secret identifier (304) and an encrypted hiding information, the latter being generated by encrypting the hiding information (303) with a custodian encryption key (307);
sending (405) the custodian hiding information (309) and an identity proof (310) of the user (100) to a custodian module (201); and
receiving (408), from the custodian module (201), a notification of whether the custodian hiding information (309) has been stored into a custodian storage (201 S) of the custodian module (201), the custodian hiding information (309) being stored along with a custodian user identity derived from the identity proof (310).

2. The method of claim 1, further comprising recovering the hidden secret from the digital information by:
obtaining (409), by a recovery module (202) running on the computer device, from the user (100), the digital information (301), or a copy thereof, and the secret identifier (304);
generating (402) the invariant information (302) using the digital information (301), or copy thereof;
sending, by the recovery module (202), to the custodian module (201), the identity proof (310) of the user (100) and the secret identifier (304);
validating, by the custodian module (201), the identity proof (310) and checking if there is any custodian hiding information (309) stored in the custodian storage (201S) related to the custodian user identity and the secret identifier (304);
upon successful validation, generating (413), by the custodian module (201), user recovery information (316) by:
retrieving the encrypted hiding information from the custodian hiding information (309) and:
encrypting the retrieved encrypted hiding information with a user encryption key (312), providing a second encrypted hiding information, and decrypting the second encrypted hiding information with the custodian decryption key (308), providing an encrypted hiding information with user key, or
decrypting the retrieved encrypted hiding information with the custodian decryption key (308) and encrypting a result thereof with a user encryption key (312), providing an encrypted hiding information with user key;
generating a recovery integrity proof (315) using an identity proof of the custodian module (201), the encrypted hiding information, and the user encryption key (312);
generating a recovery commitment proof (314) of the hiding information (303) extracted from the encrypted hiding information; and
combining the encrypted hiding information with user key with the recovery integrity proof (315) and the recovery commitment proof (314);
sending (414), by the custodian module (201), to the recovery module (202), a validation result and the generated user recovery information (316);
validating (415), by the recovery module (202), the recovery commitment proof (314) and the recovery integrity proof (315) against the encrypted hiding information with user key; and
upon a successful validation, recovering, by the recovery module (202), the secret (300) by:
retrieving the hiding information (303) by decrypting the encrypted hiding information with user key using a user decryption key (311);
applying a reverse of the mapping using the invariant information (302) and the retrieved hiding information (303);
providing, by the recovery module (202), the secret (300) to the user (100).

3. The method of claim 1 or 2, wherein the invariant information (302) is generated by:
implementing a bit selection process on bits of the digital information (301); or
implementing at least one digital information transformation process on the digital information (301), including a domain, discrete, voxel, or frequency transformation of the digital information (301).

4. The method of claim 3, further comprising providing one or more detection and correction codes to the invariant information (302).

5. The method of any one of the previous claims, wherein the mapping comprises mapping the bits of the secret (300) and the invariant information (302) having a same value.

6. The method of any one of the previous claims 1-4, wherein the mapping comprises creating an array where a first value is the bit position in the invariant information (302) that matches the first bit of the secret (300), and subsequent values in the array represent the offset positions from the previous one, corresponding to the positions where the invariant information (302) has the same bit value as the next bit of the secret (300).

7. The method of any one of the previous claims, wherein the custodian hiding information (309) is further generated by using an integrity proof (305) of the custodian hiding information (309) and a commitment proof (306) of the digital information (301), the integrity proof (305) being generated by the identity proof (310) of the user (100), the hiding information (303) and the custodian encryption key (307), and the commitment proof (306) being generated using the invariant information (302) and the custodian encryption key (307).

8. The method of any one of the previous claims, wherein the custodian hiding information is stored into the custodian storage (201S), after the custodian module (201) has correctly validated the identity proof (310) of the user (100) and contents of the custodian hiding information (309) using at least a custodian decryption key (308).

9. The method of any one of the previous claims, wherein the custodian encryption key (307) and the custodian decryption key (308) are asymmetric keys with respect to each other.

10. The method of claim 7 when depending on claim 2, wherein the recovery module (202) before the sending of the identity proof (310) of the user (100) and the secret identifier (304) to the custodian module (201) comprises generating (410) an invariant information proof (313) of the digital information (301), or copy thereof, by using the invariant information (302) and the custodian encryption key (307), the invariant information proof (313) being then sent to the custodian module (201) along with the identity proof (310) and secret identifier (304).

11. The method of claim 10, wherein the validating of the identity proof (310) and checking if there is any custodian hiding information (309) stored in the custodian storage (201S) further comprises retrieving, by the custodian module (201) the commitment proof (306) from the custodian hiding information (309) and validating the invariant information proof (313).

12. The method of any one of the previous claims, wherein the secret (300) comprises a cryptographic key, a password, a seed phrase, or a digital file.

13. The method of any one of the previous claims, wherein the digital information (301) is in binary format or comprises at least one of a picture, a video, an audio, a document or a URL.

14. A system of hiding a secret into a digital information, comprising a computer device including a hiding module (200) configured to:
obtain, from a user (100), a digital information (301) and at least one secret (300) that the user (100) wants to hide into the digital information (301), the secret (300) being in electronic form of several bits;
generate (402) an invariant information (302) using the digital information (301), the invariant information (302) comprising several bits;
generate (403) a hiding information (303) by implementing a random data processing comprising randomly mapping at least some of the bits of the secret (300) with at least some of the bits of the invariant information (302);
generate a secret identifier (304) unique for the secret (300) using the invariant information (302) and/or a value provided by the user (100);
generate (404) a custodian hiding information (309) using the generated secret identifier (304) and an encrypted hiding information, the latter being generated by encrypting the hiding information (303) with a custodian encryption key (307);
send (405) the custodian hiding information (309) and an identity proof (310) of the user (100) to a custodian module (201); and
receive (408), from the custodian module (201), a notification of whether the custodian hiding information (309) has been stored into a custodian storage (201S) of the custodian module (201), the custodian hiding information (309) being stored along with a custodian user identity derived from the identity proof (310).

15. The system of claim 14, wherein:
the computer device further comprises a recovery module (201); and
the system further comprises the custodian module (201),
the recovery module (201) and custodian module (201) being configured to implement the method of claim 2.
